# FASCICULE DE BREVET EUROPEEN

(11) **EP 4 136 492 B1**
(45) Date de publication et mention de la délivrance du brevet: **08.05.2024**
(21) Numéro de dépôt: 21713022.8
(22) Date de dépôt: 22.03.2021
(51) Int. Cl.: G02B 27/00, B60R 11/04, B60S 1/08

(54) **PROCÉDÉ DE NETTOYAGE D'UN DISPOSITIF DE PROTECTION POUR UN SYSTÈME D'ASSISTANCE À LA CONDUITE POUR UN VÉHICULE AUTOMOBILE ET SYSTÈME D'ASSISTANCE À LA CONDUITE ASSOCIÉ**
VERFAHREN ZUM REINIGEN EINER SCHUTZVORRICHTUNG FÜR EIN FAHRASSISTENZSYSTEM FÜR EIN KRAFTFAHRZEUG UND ZUGEHÖRIGES FAHRASSISTENZSYSTEM
METHOD FOR CLEANING A PROTECTIVE DEVICE FOR A DRIVE ASSIST SYSTEM FOR A MOTOR VEHICLE AND ASSOCIATED DRIVE ASSIST SYSTEM

(30) Priorité: 13.04.2020 FR 2003684
(43) Date de publication de la demande: 22.02.2023
(73) Titulaire: Valeo Systèmes d'Essuyage, 78322 Le Mesnil Saint Denis (FR)
(72) Inventeur: GIRAUD, Frederic, 78322 LE MESNIL SAINT DENIS (FR)
(74) Mandataire: Valeo Visibility
(86) Numéro de dépôt international: PCT/EP2021/057320
(87) Numéro de publication internationale: WO 2021/209229

(56) Documents cités:
- WO-A1-2018/091635
- WO-A1-2019/243133
- WO-A1-2020/064885
- WO-A1-2020/193304
- US-A1- 2011 181 725
- US-A1- 2014 232 869
- US-A1- 2019 041 234

## Description

La présente invention concerne le domaine de l'aide à la conduite et notamment au nettoyage de systèmes d'assistance à la conduite implantés sur certains véhicules. Le système d'assistance à la conduite peut comporter un capteur optique destiné à acquérir au moins une image, comme par exemple une caméra comprenant un objectif, notamment comprenant au moins une lentille, ledit capteur optique étant logé au moins partiellement dans un dispositif de protection. Par ailleurs, la présente invention concerne également un procédé de nettoyage d'un tel dispositif de protection.

Actuellement des caméras de vision avant, arrière ou encore latérales équipent un grand nombre de véhicules automobiles. Elles font notamment partie de systèmes d'assistance à la conduite tels que des systèmes d'aide au stationnement ou encore des systèmes de détection de franchissement de ligne.

On connaît des caméras qui sont installées à l'intérieur de l'habitacle d'un véhicule contre la lunette/vitre arrière en visant vers l'arrière depuis la lunette arrière du véhicule. Ces caméras sont bien protégées des aléas climatiques extérieurs et des salissures causées par des polluants organiques ou minéraux. Le nettoyage du champ de vision d'une telle caméra peut être effectuée par un balai d'essuie-glace balayant la vitre arrière du véhicule afin d'évacuer les salissures. Cependant, l'angle de vue pour de telles caméras, installées à l'intérieur de l'habitacle, n'est pas optimal, en particulier pour une aide au stationnement, car elles ne permettent pas de voir les obstacles se trouvant à proximité de l'arrière du véhicule par exemple.

Pour cette raison, on préfère installer les caméras des systèmes d'assistance à la conduite à l'extérieur des véhicules à différents endroits selon l'utilisation souhaitée, par exemple au niveau des pare-chocs arrière ou avant, ou encore au niveau de la plaque d'immatriculation arrière ou avant du véhicule automobile. Dans ce cas, la caméra est donc fortement exposée aux projections de saletés minérales ou organiques qui peuvent se déposer sur son optique et ainsi réduire son efficacité, voire la rendre inopérante. En particulier par temps de pluie, on constate des projections de saletés qui peuvent grandement affecter l'opérabilité du système d'assistance à la conduite comprenant une telle caméra. Les surfaces des optiques des caméras doivent donc être nettoyées afin de garantir leur bon état de fonctionnement. Pour ce faire, on peut déclencher une ou plusieurs opérations de nettoyage du capteur optique comme par exemple une projection d'un fluide de nettoyage afin d'éliminer les salissures présentes dans le champ de vision du capteur optique.

Afin de limiter les opérations de nettoyage de tels capteurs optiques, on connaît de l'art antérieur, des systèmes d'assistance à la conduite présentant une caméra comprenant des moyens de traitement d'images pouvant détecter la présence de salissures dans le champ de vision du capteur optique afin de déclencher une éventuelle action de nettoyage à détection de salissures.

Cependant, avec de tels systèmes d'assistance à la conduite, la détection de salissures ne peut se faire que lorsque le véhicule automobile est en mouvement. En effet, afin de déterminer si la forme détectée par le capteur optique correspond à une salissure ou à une ombre, le véhicule doit être en mouvement de manière à ce que le capteur optique puisse capturer plusieurs images correspondant à des scènes de route différentes. Il est alors nécessaire de comparer les différentes images capturées pour vérifier si la forme détectée correspond à une ombre ou à une salissure. Si la forme est persistante et immobile sur les différentes scènes de route capturées, cela indique la présence d'une salissure. Dans le cas contraire, cela indique qu'il ne s'agissait que d'une ombre. Ainsi, le procédé de détection des salissures mis en oeuvre par un tel système d'assistance à la conduite est long et complexe. Selon une autre solution, on connaît des dispositifs de protection de capteurs optiques comportant un élément optique, formant masque de protection, destiné à être disposé en amont de l'optique de la caméra.

Selon une solution de l'art antérieur, l'élément optique correspond à une vitre de protection présentant des moyens de vibration configurés pour faire vibrer cette dernière afin d'en décoller les salissures. Toutefois, il a été constaté que l'efficacité d'un tel dispositif pour des salissures tenaces et incrustées peut être limitée malgré la vibration de la vitre de protection. Par ailleurs, un tel dispositif ne présente aucun moyen permettant de détecter la présence de salissures avant que l'utilisateur ne commande la vibration de la vitre de protection afin de permettre le nettoyage de celle-ci.

Selon un autre art antérieur, cet élément optique est destiné à être entrainé en rotation par un actionneur, de façon à évacuer les salissures grâce à la force centrifuge liée à la rotation de cet élément optique. Ainsi, le capteur optique est protégé par l'élément optique et le nettoyage de cet élément optique est réalisé par la rotation de ce dernier.

Cependant, certaines salissures peuvent se déposer à des endroits de l'élément optique où l'effet centrifuge est trop faible pour permettre leur éjection. D'autre part, des salissures tenaces peuvent se déposer sur l'élément optique lorsque celui-ci reste en stationnement pendant une longue période par exemple et leur éjection par l'effet centrifuge peut être difficile. Or, un tel système d'assistance à la conduite n'offre aucune solution pour détecter de manière automatique la présence de telles salissures

Un exemple d'art antérieur est connu du document WO2020/064885.

La présente invention a pour objectif de pallier au moins partiellement les inconvénients de l'art antérieur exposés ci-dessus, en proposant un procédé de nettoyage d'un dispositif de protection permettant d'assurer de manière automatique un nettoyage efficace d'un élément optique disposé en amont de l'optique du capteur optique formant le système d'assistance à la conduite et qui soit simple de mise en oeuvre sans nécessiter le déplacement du véhicule automobile.

La présente invention a aussi pour objectif de proposer un système d'assistance à la conduite présentant des moyens de détection de salissures, notamment tenaces ou incrustées, déposées sur un élément optique rotatif disposé en amont de l'optique du capteur optique du système d'assistance à la conduite.

La présente invention a donc pour objet un procédé de nettoyage d'un dispositif de protection pour un système d'assistance à la conduite pour véhicule automobile, ledit système d'assistance à la conduite comportant un capteur optique, le capteur optique présentant une optique, et le dispositif de protection présentant un élément optique disposé en amont de l'optique, ledit élément optique présentant une surface interne disposée en regard de l'optique et une surface externe opposée à la surface interne et étant monté mobile autour d'un axe de rotation,
le procédé comporte les étapes suivantes :
- traitement d'une succession d'images acquises par le capteur optique lorsque l'élément optique est en rotation, de manière à détecter sur les images acquises une forme générale circulaire ou semi-circulaire centrée sur l'axe de rotation de l'élément optique engendrée par des salissures déposées sur la surface externe de l'élément optique, et
- déclenchement d'au moins une action de nettoyage de la surface externe de l'élément optique en cas de détection de ladite forme.

La détection d'une forme circulaire ou semi-circulaire centrée sur l'axe de rotation de l'élément optique permet de détecter la présence d'une ou plusieurs salissures. Les images acquises par le capteur optique permettant la détection de la forme générale circulaire ou semi-circulaire sont acquises aussi bien lorsque le véhicule automobile est en mouvement ou à l'arrêt. En effet, il est peu probable pour le capteur optique d'acquérir des images présentant une telle forme à moins que des salissures ne soient présentes sur la surface externe de l'élément optique du dispositif de protection. Il a été constaté qu'il est rare que des objets présentant une symétrie de révolution dont le centre est confondu avec l'axe de rotation de l'élément optique soient présents dans les scènes de routes généralement acquises par un capteur optique.

Par ailleurs, la détection de cette forme déclenchant au moins une action de nettoyage permet au système d'assistance à la conduite de présenter une bonne opérabilité en enlevant ces salissures dès leur détection.

Le procédé de nettoyage selon la présente invention peut comporter en outre une ou plusieurs des caractéristiques suivantes prises seules ou en combinaison.

Le procédé comprend une étape d'acquisition d'une succession d'images par le capteur optique préalable à l'étape de traitement, ladite étape d'acquisition pouvant être réalisée lorsque le véhicule automobile est en mouvement ou à l'arrêt.

L'étape de traitement d'une succession d'images est mise en oeuvre à l'aide de moyens de traitement d'images du système d'assistance à la conduite.

L'étape de traitement d'une succession d'images comporte au moins une séquence parmi une séquence de détection de la luminance de chaque pixel de chaque image acquise par le capteur optique, une séquence de détection d'au moins une zone sombre sur chaque pixel de chaque image acquise par le capteur optique, ou une séquence de comparaison de la succession d'images acquises par le capteur optique entre elles.

Selon un aspect, l'élément optique est mis en rotation au démarrage du véhicule automobile.

Selon un autre aspect, l'élément optique est mis en rotation dès le déclenchement du capteur optique.

Le procédé de nettoyage est mis en oeuvre lorsque le véhicule automobile est en mouvement ou à l'arrêt.

Selon un mode de réalisation particulier, au moins l'étape de traitement d'une succession d'images est répétée après l'étape de déclenchement de l' au moins une action de nettoyage.

Selon un premier mode de réalisation, l'au moins une action de nettoyage est mise en oeuvre lorsque l'élément optique est fixe.

Selon un deuxième mode de réalisation, l'au moins une action de nettoyage est mise en oeuvre lorsque l'élément optique est mobile en rotation.

Selon un mode de réalisation particulier, l'au moins une action de nettoyage est choisie parmi une action de modification de la vitesse de rotation de l'élément optique, une action de projection d'un fluide de nettoyage, comme un liquide de nettoyage ou de l'air comprimé, une action d'arrêt de la rotation de l'élément optique et une action de passage d'un organe d'essuyage, tel qu'une lame d'essuyage, sur la surface externe de l'élément optique, ou encore une combinaison de ces actions.

De manière optionnelle, le procédé de nettoyage comporte une étape de séchage pendant laquelle l'élément optique est mu en rotation.

L'étape de séchage est mise en oeuvre durant une durée de temporisation, par exemple inférieure à trois secondes.

La présente invention a également pour objet un système d'assistance à la conduite pour un véhicule automobile comprenant un capteur optique présentant une optique et configuré pour acquérir au moins une image, et un dispositif de protection du capteur optique, le dispositif de protection comportant :
- un élément optique disposé en amont de l'optique du capteur optique et monté mobile autour d'un axe de rotation, ledit élément optique présentant une surface interne disposée en regard de l'optique et une surface externe opposée à la surface interne, et
- un actionneur configuré pour entrainer en rotation l'élément optique,
le système d'assistance à la conduite comprenant :
- des moyens de traitement d'image configurés pour traiter une succession d'images acquises par le capteur optique lorsque l'élément optique est en rotation, de manière à détecter une forme générale circulaire ou semi-circulaire centrée sur l'axe de rotation de l'élément optique engendrée par des salissures déposées sur la surface externe de l'élément optique, et
- au moins une unité électronique de contrôle configurée pour communiquer avec les moyens de traitement d'images, et pour déclencher au moins une action de nettoyage de la surface externe de l'élément optique lorsque ladite forme est détectée par les moyens de traitement d'image.

Le système d'assistance à la conduite permet donc la mise en oeuvre du procédé de nettoyage décrit précédemment.

Le système d'assistance à la conduite peut comprendre en outre une ou plusieurs des caractéristiques suivantes prises seules ou en combinaison.

Les moyens de traitement d'image sont configurés pour envoyer au moins un signal représentatif de la présence de ladite forme à l'au moins une unité électronique de contrôle de façon à permettre le déclenchement de l' au moins une action de nettoyage de la surface externe de l'élément optique lorsque ladite forme est détectée.

Selon une première variante, le capteur optique comprend les moyens de traitement d'images.

Selon une deuxième variante, les moyens de traitement d'images sont intégrés à l'unité électronique de contrôle.

Selon un premier aspect, les moyens de traitement d'images sont configurés pour mettre en oeuvre une séquence de détection de la luminance de chaque pixel de chaque image acquise par le capteur optique ou une séquence de détection d'au moins une zone sombre sur chaque pixel de chaque image acquise par le capteur optique pour détecter ladite forme.

Selon ce premier aspect, les moyens de traitement d'images sont configurés pour mettre en oeuvre un algorithme pour exécuter la ou les séquences de détection.

Selon un deuxième aspect, les moyens de traitement d'images sont configurés pour mettre en oeuvre une séquence de comparaison de la succession d'images acquises par le capteur optique entre elles pour détecter ladite forme.

Selon un premier mode de réalisation, l'unité électronique de contrôle configurée pour déclencher l'au moins une action de nettoyage est configurée pour piloter l'actionneur d'entrainement en rotation de l'élément optique.

Selon un deuxième mode de réalisation, le système d'assistance à la conduite comporte au moins une première unité électronique de contrôle et une unité électronique de contrôle additionnelle, la première unité électronique de contrôle étant configurée pour piloter l'actionneur d'entrainement en rotation de l'élément optique et l'unité électronique de contrôle additionnelle étant configurée pour déclencher l' au moins une action de nettoyage.

Selon un mode de réalisation particulier, l'au moins une unité électronique de contrôle configurée pour piloter l' actionneur est configurée pour commander une modification de la vitesse de rotation de l'élément optique, de manière à réaliser l'au moins une action de nettoyage.

Selon un autre mode de réalisation particulier, le système d'assistance à la conduite comprend en outre au moins une buse de projection configurée pour projeter un fluide de nettoyage sur la surface externe de l'élément optique lorsque l'au moins une action de nettoyage est déclenchée.

La buse de projection est pilotée par l'au moins une unité électronique de contrôle configurée pour déclencher l'au moins une action de nettoyage.

Selon un aspect, la buse de projection est reliée à un compresseur afin de projeter de l'air comprimé sur la surface externe de l'élément optique.

Selon un autre aspect, la buse de projection est reliée à un réservoir de liquide de nettoyage afin de projeter du liquide de nettoyage sur la surface externe de l'élément optique.

Selon un autre mode de réalisation particulier, le système d'assistance à la conduite comprend en outre au moins un organe d'essuyage, tel qu'une lame d'essuyage, configuré pour balayer la surface externe de l'élément optique de manière à essuyer cette surface externe.

L'organe d'essuyage est piloté par l'au moins une unité électronique de contrôle.

Selon un mode de réalisation spécifique, le système d'assistance à la conduite comprend une première unité électronique de contrôle configurée pour piloter l'actionneur et une unité électronique de contrôle par organe de nettoyage permettant de mettre en oeuvre l'au moins une action de nettoyage.

D'autres avantages et caractéristiques de la présente invention apparaitront plus clairement à la lecture de la description suivante, donnée à titre illustratif et non limitatif, et des dessins annexés dans lesquels :
- la figure 1 est une représentation schématique en perspective d'un système d'assistance à la conduite,
- la figure 2 est une représentation schématique en perspective d'un système d'assistance à la conduite selon un mode de réalisation particulier,
- la figure 3 est une représentation schématique d'une vue éclatée en coupe partielle du système d'assistance à la conduite de la figure 1,
- la figure 4 est un schéma de principe du fonctionnement du système d'assistance à la conduite de la figure 1 selon une première variante,
- la figure 5 est un schéma de principe du fonctionnement du système d'assistance à la conduite de la figure 1 selon une deuxième variante,
- la figure 6 est un schéma de principe du fonctionnement du système d'assistance à la conduite de la figure 1 selon une troisième variante,
- la figure 7 est un organigramme présentant un procédé de nettoyage d'un dispositif de protection du système d'assistance à la conduite de la figure 1,
- la figure 8A est une représentation schématique d'une image acquise par un capteur optique du système d'assistance à la conduite présentant une salissure sur un dispositif de protection en amont du capteur optique, et
- la figure 8B est une représentation schématique de l'image acquise de la figure 8A ne présentant aucune salissure sur le dispositif de protection.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent à un seul mode de réalisation. De simples caractéristiques de différents modes de réalisation peuvent également être combinées ou interchangées pour fournir d'autres réalisations.

Dans la description suivante, il est fait référence à une première unité électronique de contrôle et à une unité électronique de contrôle additionnelle, et à une première et à une deuxième actions de nettoyage. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier la mise en oeuvre du procédé de nettoyage du dispositif de protection du capteur optique, ou encore pour apprécier l'agencement des différents éléments composant le système d'assistance à la conduite.

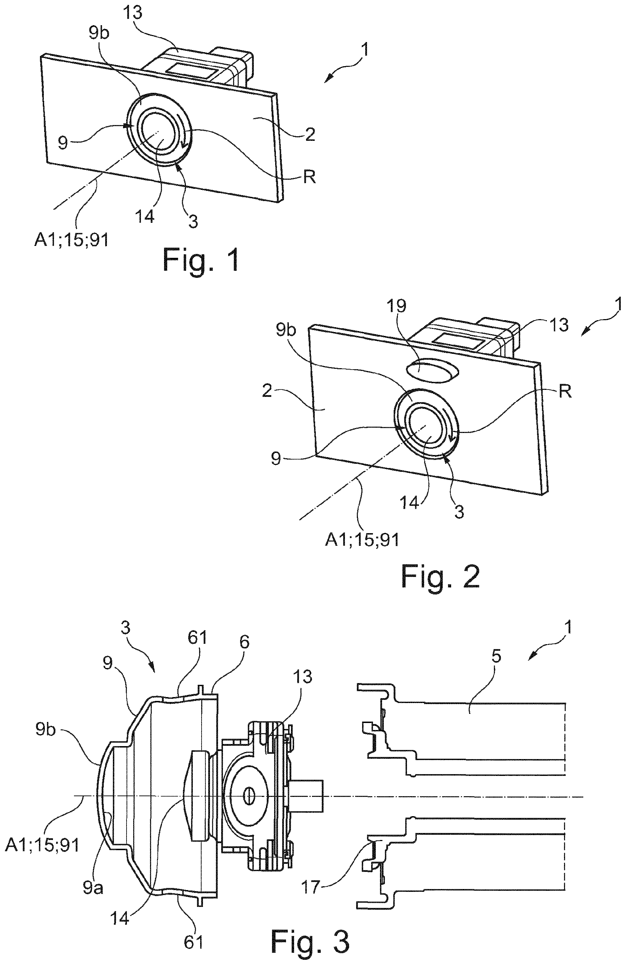

En référence aux figures 1 à 6, l'invention concerne un système d'assistance à la conduite 1 pour un véhicule automobile.

Dans la description suivante, l'expression « avant du véhicule automobile » correspond à la face du véhicule automobile exposée au flux d'air en marche normale du véhicule automobile, il s'agit notamment de la face présentant les phares. Par opposition, on entend par «arrière du véhicule automobile », la face du véhicule automobile opposée à la face avant.

Par ailleurs, « amont » est défini, dans la description suivante, par le sens des rayons lumineux, c'est-à-dire de l'extérieur vers l'intérieur d'un capteur optique 13 du système d'assistance à la conduite 1. Un premier élément disposé en amont d'un deuxième élément est alors situé avant le deuxième élément dans le sens de propagation des rayons lumineux à l'intérieur du capteur optique 13. De même, « aval » dans la description suivante est également défini selon le sens de propagation des rayons lumineux à l'intérieur du capteur optique 13. Ainsi, un premier élément disposé en aval d'un deuxième élément est alors situé après le deuxième élément dans le sens de propagation des rayons lumineux à l'intérieur du capteur optique 13.

De plus, on entend par « salissures » dans la description suivante des gouttes d'eau ou des traces d'eau présentes sur un élément optique 9 en amont du capteur optique 13, ou encore des polluants organiques tels que des insectes par exemples ou minéraux comme de la boue par exemple, ou encore une combinaison de ces différents éléments.

D'autre part, on entend par « luminance » dans la description suivante, une grandeur correspondant à la sensation visuelle de luminosité d'une surface. Plus particulièrement, la luminance correspond à la puissance de la lumière visible passant ou étant émise en un point d'une surface et dans une direction donnée par unité de surface et par unité d'angle solide.

Ensuite, on entend par « transparent » dans la description suivante, un matériau transmettant la lumière et au travers duquel les objets sont visibles avec netteté, en particulier les objets disposés à l'extérieur du véhicule automobile dont l'image est capturée par le capteur optique 13. En particulier, un matériau transparent dans la description suivante peut être coloré ou incolore.

En référence aux figures 1 à 3, il est représenté des exemples de réalisation du système d'assistance à la conduite 1 pour un véhicule automobile. Le système d'assistance à la conduite 1 comprend le capteur optique 13 et un dispositif de protection 3 du capteur optique 13.

Le capteur optique 13 peut par exemple être un capteur optique 13 de prises de vues tel qu'une caméra. Il peut s'agir par exemple d'un capteur CCD (pour « Charged Coupled Device » en anglais, à savoir un dispositif à transfert de charge) ou d'un capteur CMOS comportant une matrice de photodiodes miniatures. Selon une autre variante, il peut s'agir d'un capteur pour la télédétection laser dit capteur LIDAR, acronyme anglais de « Light Détection And Ranging ». Ainsi, le capteur optique 13 est configuré pour acquérir au moins une image.

Le capteur optique 13 comporte une optique 14 d'axe optique 15. L'optique 14 peut par exemple être un objectif. Un objectif peut comporter au moins une lentille, en particulier plusieurs lentilles suivant le champ de vision et la résolution du capteur optique 13, par exemple entre deux et dix lentilles, généralement quatre ou cinq lentilles, voire dix lentilles dans le cas d'une optique 14 dite oeil de poisson (« fish-eye » en anglais). Au moins une des lentilles de l'optique 14 est par exemple convexe (bombée) de convexité orientée vers l'extérieur du capteur optique 13, par exemple pour une lentille dite oeil de poisson.

De plus on peut prévoir un support 17 (visible sur la figure 3) du capteur optique 13. Ce support 17 est agencé à l'arrière du capteur optique 13 du côté opposé à l'optique 14. Selon les modes de réalisation représentés en référence aux figures 1 à 3, le capteur optique 13 et le support 17 sont destinés à être montés fixes dans le dispositif de protection 3.

Le système d'assistance à la conduite 1 peut être monté à l'avant du véhicule automobile au niveau d'un pare-chocs par exemple. En variante, le système d'assistance à la conduite 1 peut être installé à l'arrière du véhicule automobile, au niveau du pare-chocs ou de la plaque d'immatriculation par exemple. Selon encore une autre variante, le système d'assistance à la conduite peut être monté sur les côtés du véhicule automobile, au niveau des rétroviseurs par exemple.

Le système d'assistance à la conduite 1, et plus particulièrement le dispositif de protection 3, peut être fixé selon toute technique connue de l'homme de l'art sur tout élément du véhicule automobile. Selon le mode de réalisation des figures 1 et 2, le système d'assistance à la conduite 1 est installé dans un élément de carrosserie 2, comme par exemple un pare-chocs, présentant une ouverture à travers laquelle au moins l'optique 14 du capteur optique 13 fait saillie.

En référence aux figures 1 à 3, le dispositif de protection 3 comporte un élément optique 9 monté mobile autour d'un axe de rotation A1 et un actionneur 5 configuré pour entrainer en rotation l'élément optique 9, comme par exemple un moteur. L'élément optique 9 est disposé en amont de l'optique 14 du capteur optique 13. Ainsi, l'élément optique 9 fait également saillie de l'élément de carrosserie 2, comme représenté en référence aux figures 1 et 2, à l'état monté du système d'assistance à la conduite 1 sur le véhicule automobile. Plus particulièrement, l'élément optique 9 présente une surface interne 9a disposée en regard de l'optique 14 et une surface externe 9b opposée à la surface interne 9a. L'élément optique 9 est donc destiné à protéger l'optique 14 du capteur optique 13 de projections éventuelles de salissures ou de débris solides qui pourraient abîmer cette optique 14. Il s'agit donc d'un élément de protection, ou plus précisément d'un masque de protection du capteur optique 13, et c'est cet élément optique 9 qui est soumis aux agressions provenant de l'extérieur, c'est-à-dire aussi bien aux projections d'eau, de polluants, de graviers que des dépôts de polluants ou de traces d'eau.

De plus, la rotation de l'élément optique 9 autour de l'axe de rotation A1 permet d'éjecter les salissures de la surface externe 9b par effet centrifuge. Selon le mode de réalisation particulier de la figure 3, l'élément optique 9 est distinct du capteur optique 13. Selon une variante non représentée ici, l'élément optique 9 peut être un composant de l'optique 14, et notamment une lentille externe de l'optique 14.

L'élément optique 9 est dimensionné de manière à recouvrir au moins toute la surface de l'optique 14. L'élément optique 9 est donc agencé dans le champ de vision du capteur optique 13. A cet effet, l'élément optique 9 est transparent afin de ne pas nuire à l'opérabilité du capteur optique 13. Cet élément optique 9 peut être réalisé en verre ou en un matériau plastique transparent tel que du polycarbonate par exemple.

D'autre part, la surface externe 9b de l'élément optique 9 peut présenter une ou plusieurs des propriétés suivantes : hydrophobe, filtre infra-rouge, phtocatalytique, super hydrophobe, lipophobe, hydrophile, super hydrophile, résistance aux gravillons, ou encore tout autre traitement de surface permettant de réduire l'adhésion des salissures. En particulier, grâce à des propriétés hydrophobes, de la surface externe 9b de l'élément optique 9, des gouttes d'eau éventuelles ruissellent sur la surface externe 9b de l'élément optique 9 sans laisser de traces car l'eau ne pourra pas adhérer sur cette surface externe 9b. Cela permet ainsi de limiter la présence de traces d'eau sur l'élément optique 9 pouvant nuire au bon fonctionnement du système d'assistance à la conduite 1 et notamment à la qualité des images acquises par le capteur optique 13. D'autre part, selon le traitement de surface de la surface externe 9b, les possibilités d'adhérence des polluants organiques ou minéraux sur cette surface externe 9b peuvent être limitées, ce qui contribue également au bon fonctionnement du système d'assistance à la conduite 1. D'autre part, l'élément optique 9 présente un axe optique 91 confondu avec l'axe de rotation A1 de l'élément optique 9. De plus, selon le mode de réalisation des figures 1 à 3, l'axe optique 15 du capteur optique 13 et l'axe de rotation A1 de l'élément optique 9 sont également confondus.

Selon le mode de réalisation illustré en référence à la figure 3, le dispositif de protection 3 peut comporter en outre un boitier 6 configuré pour recevoir au moins en partie le capteur optique 13. Le boitier 6 et l'élément optique 9 forment une seule pièce selon ce mode de réalisation particulier. Selon un autre mode de réalisation non représenté ici, le boitier 6 et l'élément optique 9 peuvent être deux pièces distinctes solidarisées. Le boitier 6 est agencé de manière à être entrainé en rotation par l'actionneur 5, ce qui a pour conséquence l'entrainement en rotation de l'élément optique 9 afin d'éliminer les salissures présentes sur la surface externe 9b de l'élément optique 9 par effet centrifuge. Par ailleurs, le boitier 6 peut être un boitier étanche réalisé en tout matériau approprié connu de l'homme de l'art. De plus, le boitier 6 peut présenter des moyens anti-condensation tels qu'au moins un orifice traversant 61 au niveau du boitier 6 réalisé par perçage par exemple et présentant de préférence une ou plusieurs membranes semi-perméables (non représentées) par exemple. Dans un tel cas, il peut être prévu des moyens de compensation de la perte de masse éventuellement engendrée par un tel orifice afin de ne pas déséquilibrer la rotation de l'élément optique 9.

L'actionneur 5 est par exemple configuré pour entrainer le boitier 6 en rotation à une vitesse comprise entre 1000 et 50000 tours/minute, de préférence entre 5000 et 20000 tours/minute, et de manière encore préférée entre 7000 et 15000 tours/minute. De telles vitesses de rotation permettent l'éjection par effet centrifuge de la majeure partie des salissures qui pourraient s'être déposées sur la surface externe de l'élément optique 9.

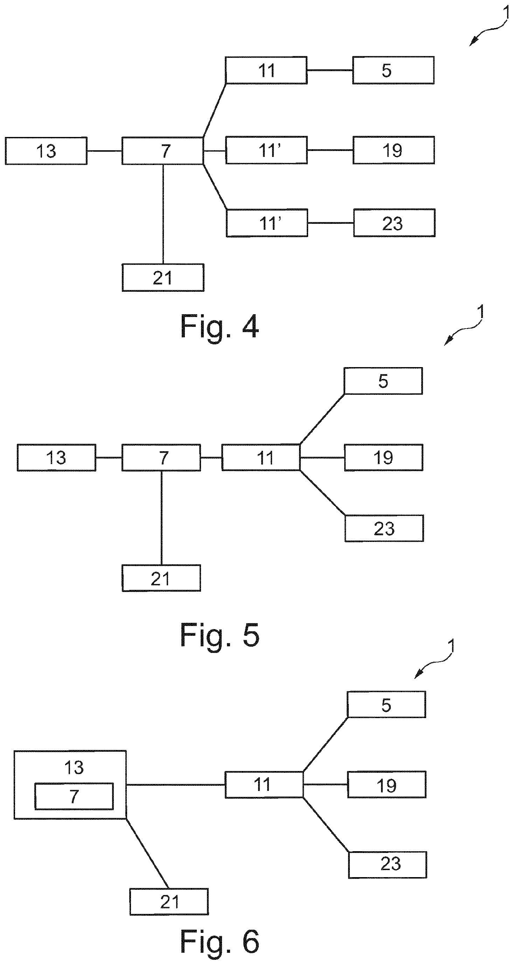

Afin de détecter des salissures notamment incrustées ou tenaces, à cause d'un stationnement prolongé par exemple du véhicule automobile, au niveau de la surface externe 9b de l'élément optique 9, où dont l'emplacement rend leur éjection par l'effet centrifuge difficile, le système d'assistance à la conduite 1 comprend en outre des moyens de traitement d'images 7 et au moins une unité électronique de contrôle 11, comme représenté en référence aux figures 4 à 6.

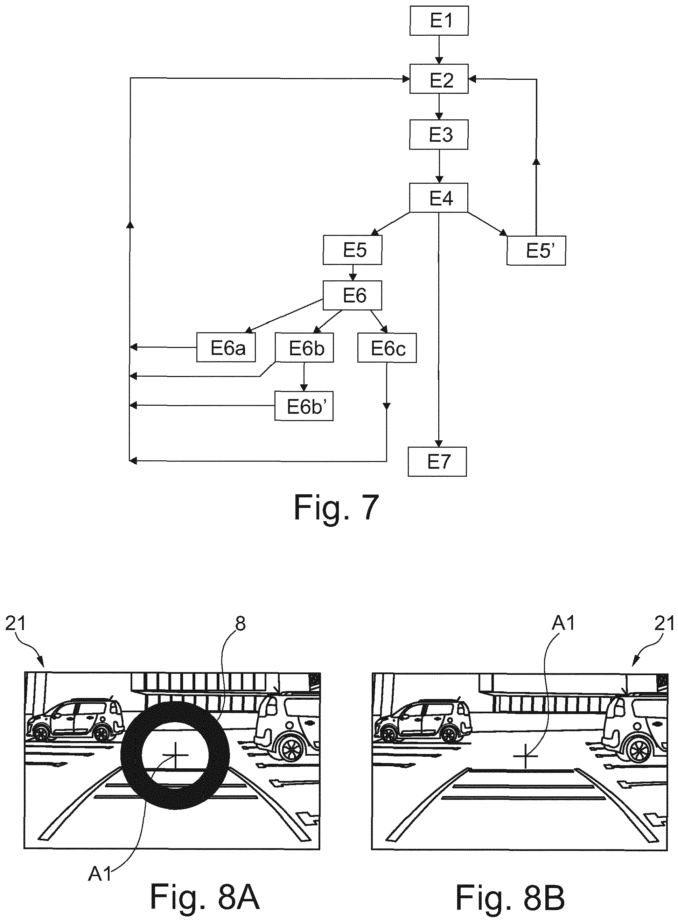

Les moyens de traitement d'images 7 sont configurés pour traiter une succession d'images acquises par le capteur optique 13 lorsque l'élément optique 9 est en rotation. Plus précisément, les moyens de traitement d'images 7 sont configurés pour détecter une forme générale circulaire ou semi-circulaire 8 (schématisée sur la figure 8A) centrée sur l'axe de rotation A1 de l'élément optique 9. Du fait de la rotation de l'élément optique 9, si une ou plusieurs salissures sont présentes sur la surface externe 9b de l'élément optique 9, il en résultera cette forme circulaire ou semi-circulaire 8. Autrement dit, une telle forme générale circulaire ou semi-circulaire centrée sur l'axe de rotation A1 de l'élément optique 9 est engendrée par des salissures déposées sur la surface externe 9b de l'élément optique 9. Dans les images acquises par le capteur optique 13, il a été constaté que la détection de telles formes sur les images acquises par le capteur optique 13 dans le cas où aucune salissure n'est présente sur la surface externe 9b de l'élément optique 9 est peu probable. En effet, des objets présentant une symétrie de révolution centrée sur l'axe de rotation A1 de l'élément optique 9 sont rares dans les scènes de route qui sont acquises par le capteur optique 13. Ainsi, la détection de salissures dans le champ de vision du capteur optique 13 est améliorée. Par ailleurs, les images acquises par le capteur optique 13 qui sont analysées par les moyens de traitement 7 pour la détection d'une telle forme peuvent être acquises aussi bien lorsque le véhicule automobile est en mouvement ou à l'arrêt.

En se référant aux figures 4 à 6 et 8A, 8B, selon un premier mode de réalisation, les moyens de traitement d'images 7 peuvent être configurés pour mettre en oeuvre une séquence de détection de la luminance de chaque pixel de chaque image acquise par le capteur optique 13 ou une séquence de détection d'au moins une zone sombre sur chaque pixel de chaque image acquise par le capteur optique 13 pour détecter ladite forme 8. Ainsi, même des traces de salissures peu visibles, voire incolores, comme par exemple des résidus organiques venant d'insectes, peuvent être détectées par les moyens de traitement d'images 7. Plus particulièrement, les moyens de traitement d'images 7 sont configurés pour mettre en oeuvre un algorithme pour exécuter la ou les séquences de détection.

En effet, même en cas de présence d'ombres dans les images acquises par le capteur optique 13, la luminance sur les différents pixels des images acquises est généralement la même ou quasiment la même. Une diminution importante de la luminance sur certaines zones des images acquises par le capteur optique 13 peut donc indiquer la présence de salissures tenaces sur la surface externe 9b de l'élément optique 9. Même dans le cas de salissures incolores, celles-ci peuvent diffracter la lumière et donc provoquer une diminution de la luminance sur certaines zones des images acquises par le capteur optique 13. D'autre part, si la diminution de la luminance détectée, ou encore la zone sombre, présente la forme générale circulaire ou semi-circulaire 8 centrée sur l'axe de rotation A1 de l'élément optique 9, cela indique la présence d'une ou de plusieurs salissures. Comme énoncé précédemment, la détection de cette forme 8 traduit la présence d'une ou de plusieurs salissures. En variante ou en complément, les moyens de traitement d'images 7 peuvent être configurés pour mettre en oeuvre une séquence de comparaison de la succession d'images acquises par le capteur optique 13 entre elles pour détecter ladite forme 8.

Les salissures détectées par les moyens de traitement d'images 7 sont sur la surface externe 9b de l'élément optique 9 du dispositif de protection 3 (en se référant également aux figures 1 à 3).

Par ailleurs, afin de transmettre les images acquises par le capteur optique 13 à un usager du véhicule automobile, les moyens de traitement d'image 7 peuvent être reliés à au moins un organe d'affichage tel qu'un écran 21 (schématisé sur les figures 4 à 6) configuré pour afficher les images acquises par le capteur optique 13. Cet écran 21 peut être disposé à l'intérieur de l'habitacle du véhicule automobile, comme par exemple au niveau d'une console centrale.

D'autre part, l'au moins une unité électronique de contrôle 11 est configurée pour communiquer avec les moyens de traitement d'images 7 et pour déclencher au moins une action de nettoyage de la surface externe 9b de l'élément optique 9 lorsque ladite forme 8 est détectée par les moyens de traitement d'image 7.

Plus particulièrement, les moyens de traitement d'images 7 sont configurés pour envoyer au moins un signal représentatif de la présence de ladite forme 8 à l'au moins une unité électronique de contrôle 11 de façon à permettre le déclenchement de l'au moins une action de nettoyage de la surface externe 9b de l'élément optique 9 lorsque ladite forme 8 est détectée.

Sur les figures 4 à 6, il est représenté des schémas de principe du fonctionnement du système d'assistance à la conduite 1 selon différentes variantes de réalisation, et notamment du nettoyage de la surface externe 9b de l'élément optique 9.

Les moyens de traitement d'images 7 sont reliés à au moins une unité électronique de contrôle 11. La ou les unité(s) électronique(s) de contrôle 11 est(sont) configurée(s) pour déclencher une ou plusieurs actions de nettoyage. Par ailleurs, la même unité ou une autre unité électronique de contrôle 11 peut être configurée pour piloter l'actionneur 5 afin de mettre en rotation l'élément optique 9 (visible sur les figures 1 à 3).

À titre d'exemple non limitatif, l'unité électronique de contrôle 11 peut commander une variation de la vitesse de rotation de l'élément optique 9 pour réaliser une action de nettoyage. Plus particulièrement, elle peut commander des accélérations et des décélérations de l'élément optique 9 afin de faciliter la perte d'adhérence des salissures. Avantageusement, c'est la même unité électronique de contrôle 11 configurée pour piloter l'actionneur 5 qui est configurée pour commander une modification de la vitesse de rotation de l'élément optique 9.

D'autre part, une action de nettoyage peut également consister en la projection d'un fluide de nettoyage, comme de l'air comprimé ou d'un liquide de nettoyage sur la surface externe 9b de l'élément optique 9. A cet effet, l'élément de carrosserie 2 présente une ouverture pour permettre le passage d'une buse de projection 19 du système d'assistance à la conduite 1 (comme représenté de façon schématique sur la figure 2) et l'unité électronique de contrôle 11 pilote la buse de projection 19 afin de déclencher une telle action de nettoyage. Selon un mode de réalisation particulier, lorsque l'action de nettoyage correspond à la projection d'air comprimé sur la surface externe 9b de l'élément optique 9, la buse de projection 19 peut être reliée à un compresseur (non représenté) afin de projeter de l'air comprimé sur cette surface externe 9b. Selon un autre mode de réalisation, lorsque l'action de nettoyage correspond à la projection de liquide de nettoyage, la buse de projection 19 peut être reliée à un réservoir de liquide de nettoyage (non représenté), comme par exemple un réservoir de liquide de lave-glace du véhicule automobile, afin de projeter du liquide de nettoyage sur la surface externe 9b de l'élément optique 9.

Selon une autre variante, une action de nettoyage peut consister en l'arrêt de la rotation de l'élément optique 9 combiné avec le passage d'un organe d'essuyage 23, comme une lame d'essuyage par exemple, afin d'enlever les salissures de la surface externe 9b par une action mécanique, et plus particulièrement en balayant la surface externe 9b de l'élément optique 9. Comme pour les différentes autres actions de nettoyage, l'organe d'essuyage 23 est piloté par l'au moins une unité électronique de contrôle 11. D'autre part, ces différentes actions de nettoyage peuvent être éventuellement combinées, comme cela est décrit plus en détail ultérieurement.

Le système d'assistance à la conduite 1 peut comprendre une seule unité électronique de contrôle 11 configurée pour commander l'actionneur 5 afin de mettre en rotation l'élément optique 9 et pour mettre en oeuvre une ou plusieurs actions de nettoyage. De manière alternative, le système d'assistance à la conduite 1 peut comprendre une première unité électronique de contrôle 11 notamment configurée pour piloter l'actionneur afin de mettre en rotation l'élément optique 9 et une ou plusieurs autres unités électroniques de contrôle 11' configurées pour mettre en oeuvre une action de nettoyage. Par exemple, la première unité électronique de contrôle 11 peut être configurée pour piloter l'actionneur afin de mettre en rotation l'élément optique 9 et de modifier cette vitesse de rotation lorsqu'une telle action de nettoyage est mise en oeuvre, et au moins une unité électronique de contrôle additionnelle 11' est par exemple configurée pour mettre en oeuvre une action de nettoyage correspondant à la projection d'un fluide de nettoyage sur la surface externe 9b de l'élément optique 9, ou encore au passage de l'organe d'essuyage 23.

Selon une première variante (figure 4), le système d'assistance à la conduite 1 comporte au moins une première unité électronique de contrôle 11 et une unité électronique de contrôle additionnelle 11', et plus particulièrement deux unités électroniques de contrôle additionnelles 11'. La première unité électronique de contrôle 11 est configurée pour piloter l'actionneur 5 d'entrainement en rotation de l'élément optique 9 et les unités électroniques de contrôle additionnelles 11' sont configurées pour déclencher chacune au moins une action de nettoyage, à savoir la projection d'un fluide de nettoyage ou l'arrêt de la rotation de l'élément optique 9 afin de commander le passage de l'organe d'essuyage 23 sur la surface externe 9b de celui-ci, ou encore une modification de la vitesse de rotation de l'élément optique 9. De manière alternative, deux actions de nettoyage peuvent être combinées et notamment la projection d'un liquide de nettoyage et le passage de l'organe d'essuyage 23. Ainsi, le système d'assistance à la conduite 1 comprend une première unité électronique de contrôle 11 configurée pour piloter l'actionneur 5 et une unité électronique de contrôle additionnelle 11' par organe de nettoyage permettant de mettre en oeuvre l'au moins une action de nettoyage. Les moyens de traitement d'images 7 peuvent être configurés pour communiquer aux unités électroniques de contrôle additionnelles 11' la présence de la forme générale circulaire ou semi-circulaire 8 centrée sur l'axe de rotation A1 de l'élément optique 9 afin de permettre la mise en oeuvre d'une première action de nettoyage, comme par exemple la projection de fluide de nettoyage, puis éventuellement la mise en oeuvre d'une deuxième action de nettoyage si cela s'avère nécessaire.

Selon une deuxième variante (figure 5), une même unité électronique de contrôle 11 est configurée pour déclencher une ou plusieurs actions de nettoyage et pour piloter l'actionneur 5 d'entrainement en rotation de l'élément optique 9. Ainsi, le système d'assistance à la conduite 1 peut comprendre un nombre réduit, voire une seule unité électronique de contrôle 11, ce qui permet de limiter le nombre de composants du système d'assistance à la conduite 1 et donc son encombrement et son coût par rapport à la première variante décrite en référence à la figure 4.

Selon ces première (figure 4) et deuxième (figure 5) variantes, l'au moins une unité électronique de contrôle 11, les moyens de traitements d'image 7 et le capteur optique 13 sont des éléments distincts.

Selon une troisième variante (figure 6), le capteur optique 13 comprend les moyens de traitement d'images 7. Le capteur optique 13 est relié à l'unité électronique de contrôle 11 ou aux différentes unités électroniques de contrôle 11, 11' comme décrit en référence à la figure 4. Plus particulièrement, le capteur optique 13 est apte à envoyer des signaux à l'unité ou chaque électronique de contrôle 11, notamment sans moyens de traitement d'images 7 additionnels intermédiaires comme représentés en référence aux figures 4 et 5. Le capteur optique 13 peut également être relié à l'écran 21. Il peut s'agir d'une communication directe, c'est-à-dire que le capteur optique 13 transmet les images acquises sur l'écran 21 sans passer par des moyens de traitement d'images additionnels, comme représenté en référence aux figures 4 et 5.

Selon cette troisième variante, le système d'assistance à la conduite 1 comprend une seule unité électronique de contrôle 11 pour piloter l'actionneur 5 afin de mettre en rotation l'élément optique 9 et éventuellement assurer l'au moins une action de nettoyage lorsque celle-ci consiste en une modification de la vitesse de rotation de l'élément optique 9 et également pour piloter la buse de projection 19 ou l'organe d'essuyage 23 lorsque le système d'assistance à la conduite 1 comporte de tels éléments.

Selon une variante non représentée ici, le système d'assistance à la conduite 1 peut comprendre les moyens de traitement d'images 7 intégrés au capteur optique 13 et la première unité électronique de contrôle 11 configurée pour piloter la rotation de l'élément optique 9 et au moins une unité électronique de contrôle additionnelle 11' configurée pour piloter l'au moins une action de nettoyage.

L'utilisation d'un capteur optique 13 comprenant les moyens de traitement d'images 7 permet de limiter le nombre de composants du système d'assistance à la conduite 1 et donc son encombrement. En effet, il n'est pas nécessaire de prévoir des moyens de traitement d'images additionnels autre que ceux déjà embarqués dans le capteur optique 13.

Selon une autre variante non représentée ici, le système d'assistance à la conduite 1 comprend une seule unité électronique de contrôle 11 dans laquelle les moyens de traitement d'images 7 sont intégrés. Ainsi, il n'est pas nécessaire d'avoir de moyens de traitement d'images 7 additionnels communiquant à la fois avec le capteur optique 13 et l'unité électronique de contrôle 11 afin de commander la ou les actions de nettoyage. Selon cette autre variante, l'unité électronique de contrôle 11 est configurée pour commander la vitesse de rotation de l'élément optique 9 et également pour piloter une ou plusieurs actions de nettoyage. Par ailleurs, selon cette autre variante, l'unité électronique de contrôle 11 peut être reliée à l'écran 21 afin de transmettre les images acquises par le capteur optique 13 à l'usager du véhicule automobile lorsque cela est nécessaire, comme par exemple lors d'une manoeuvre de mise en stationnement du véhicule automobile.

En référence à la figure 7, il est représenté un organigramme illustrant le fonctionnement du système d'assistance à la conduite 1 décrit précédemment, et plus particulièrement un procédé de nettoyage du dispositif de protection 3 du capteur optique 13, et notamment de l' élément optique 9.

Le procédé comprend une étape E1 de démarrage de la rotation de l'élément optique 9 afin d'éjecter par effet centrifuge certaines salissures, comme par exemple des poussières, qui peuvent être déposées sur celui-ci. Cette étape E1 de démarrage de la rotation peut être effectuée au démarrage du véhicule automobile ou dès le déclenchement du capteur optique 13. L'élément optique 9 est mis en rotation par l'actionneur 5 (voir figure 3). Par ailleurs, au moins lors du fonctionnement du système d'assistance à la conduite 1, l'élément optique 9 est maintenu en rotation de manière à éjecter par effet centrifuge des gouttes d'eau ou des salissures qui pourraient se déposer sur ce dernier afin de garantir la qualité des images acquises par le capteur optique 13 (visible notamment sur les figures 1 à 3) et donc une bonne opérabilité du système d'assistance à la conduite 1.

Le procédé comprend une étape E2 d'acquisition d'une succession d'images par le capteur optique 13. Cette étape E2 d'acquisition d'images par le capteur optique 13 peut être réalisée aussi bien lorsque le véhicule est en mouvement ou à l'arrêt.

Le procédé comporte ensuite une étape E3 de traitement de la succession d'images acquises par le capteur optique 13 lorsque l'élément optique 9 est en rotation afin de détecter sur les images acquises la forme générale circulaire ou semi-circulaire 8 (visible sur la figure 8A) centrée sur l'axe de rotation A1 de l' élément optique 9. La détection d'une telle forme 8 sur les images acquises par le capteur optique 13, même lorsque le véhicule automobile est à l'arrêt, permet d'identifier la présence de salissures sur la surface externe 9b de l'élément optique 9 car il a été constaté qu'il est peu probable de détecter de telles formes lorsque cette surface externe 9b ne présente aucune salissure.

L'étape E3 de traitement d'une succession d'images est mise en oeuvre à l'aide de moyens de traitement d'image 7 du système d'assistance à la conduite 1. Comme dit précédemment, les moyens de traitement d'images 7 peuvent être inclus dans l'électronique du capteur optique 13, comme représenté en référence à la figure 6, ou dans l'au moins une unité électronique de contrôle 11 du système d'assistance à la conduite 1, ou encore être distincts du capteur optique 13 et de l'unité électronique de contrôle 11, comme représenté en référence aux figures 4 et 5.

L'étape E3 de traitement de la succession d'images peut comporter au moins une séquence parmi une séquence de détection de la luminance ou de zones sombres ou encore une séquence de comparaison entre elles des images acquises par le capteur optique 13 au cours de l'étape E2 comme décrit précédemment.

Après cette étape E3 de traitement d'une succession d'images, le procédé peut comporter une étape E4 d'envoi d'un signal à l' au moins une unité électronique de contrôle 11 informant de l'absence (étape E5') ou de la présence (étape E5) de la forme générale circulaire ou semi-circulaire 8 centrée sur l'axe de rotation A1 de l'élément optique 9.

Quel que soit le résultat de l'étape E3 de traitement d'une succession d'images, les différentes images acquises par le capteur optique 13 peuvent être transmises à l'occupant du véhicule automobile au cours d'une étape E7 d'affichage des images acquises. En particulier, ces images acquises sont affichées sur l'écran 21 (schématisé sur les figures 4 à 6) disposé à l'intérieur de l'habitacle du véhicule automobile par exemple, comme représentées en référence aux figures 8A et 8B. Plus précisément, la figure 8A correspond à une image acquise par le capteur optique 13 présentant la forme générale circulaire ou semi-circulaire 8 centrée sur l'axe de rotation A1 de l'élément optique 9 traduisant la présence d'une ou de plusieurs salissures. Par ailleurs, la figure 8B correspond à une image ne présentant aucune salissure. Ainsi, la figure 8A correspond à l'image affichée sur l'écran 21 lorsque l'unité électronique de contrôle 11 est informée de la présence de salissures (étape E5) sur la surface externe 9b de l'élément optique 9, et la figure 8B correspond à l'image affichée sur l'écran 21 lorsque l'unité électronique de contrôle 11 est informée de l'absence de salissures (étape E5') sur la surface externe 9b de l'élément optique 9. La mise en oeuvre du procédé de nettoyage ne nuit pas à l'utilisation du système d'assistance à la conduite 1 si l'utilisateur du véhicule automobile en a besoin.

A réception du signal représentatif de la présence de la forme générale circulaire ou semi-circulaire 8, par exemple par l'unité électronique de contrôle 11, le procédé met en oeuvre une étape E6 de déclenchement d'au moins une action de nettoyage de la surface externe 9b de l'élément optique 9. Autrement dit, la détection de la forme générale circulaire ou semi-circulaire 8 lors de l'étape E5 permet le déclenchement automatique de l'étape de nettoyage E6. Ainsi, les conditions d'opérabilité du capteur optique 13 sont améliorées car la surface externe 9b de l'élément optique 9 est nettoyée dès que la forme générale circulaire ou semi-circulaire 8 est détectée afin de nettoyer la surface externe 9b de l'élément optique 9 avant l'affichage éventuel des images acquises par le capteur optique 13 sur l'écran 21.

Comme énoncé précédemment, l'action de nettoyage peut par exemple être une action de modification de la vitesse de rotation E6a de l'élément optique 9. Cette modification de la vitesse de rotation E6a de l'élément optique 9 peut correspondre à une accélération de cette vitesse de rotation, ou encore à des phases d'accélérations et de décélérations de celui-ci afin de permettre la perte d'adhérence des salissures sur la surface externe 9b de l'élément optique 9 afin de permettre leur éjection. Ces phases d'accélération et de décélération peuvent éventuellement correspondre à une variation rapide des sens de rotation de l'élément optique 9.

En variante ou complément, l'action de nettoyage peut par exemple être une projection d'un fluide de nettoyage E6b. Cette étape de projection E6b peut être mise en oeuvre aussi bien lorsque l'élément optique 9 est fixe ou mobile en rotation.

Plus particulièrement, et de manière optionnelle selon le mode de réalisation particulier représenté en référence à la figure 7, lorsque l'action de nettoyage correspond à l'étape de projection E6b de liquide de nettoyage, le procédé comporte avantageusement une étape de séchage E6b' pendant laquelle l'élément optique 9 est mu en rotation. Ceci peut se faire par exemple, entre l'action ou les actions de nettoyage E6 et une nouvelle itération de l'étape d'acquisition d'une succession d'images E2. Cette étape de séchage E6b' permet l'évacuation du liquide de nettoyage utilisé et éventuellement des salissures qui peuvent s'être déposées sur l'élément optique 9 juste après l'action de nettoyage.

Par ailleurs, une étape de séchage E6b' peut également être mise en oeuvre pour permettre l'évacuation de projections éventuelles d'un liquide comme par exemple de l'eau, de la neige fondue, ou même des hydrocarbures sur la surface externe 9b de l'élément optique 9, notamment juste après l'action de nettoyage. On évite de détecter des traces qui ne correspondent pas à des salissures tenaces ou incrustées. Selon un mode de réalisation particulier, l'étape de séchage E6b' est mise en oeuvre durant une durée de temporisation, par exemple inférieure à 3 secondes. Toutefois, selon d'autres modes de réalisation non décrits ici, cette étape de séchage E6b' peut être mise en oeuvre pendant une durée supérieure à 3 secondes.

Selon encore une autre variante ou en complément, l'action de nettoyage peut comprendre une action d'arrêt de la rotation de l'élément optique combinée à une action de passage E6c d'un organe d'essuyage 23 (visible sur la figure 6) sur la surface externe 9b de l'élément optique 9.

Une combinaison de ces différentes actions de nettoyage peut être mise en oeuvre. Selon l'action de nettoyage mise en oeuvre, celle-ci peut être réalisée lorsque l'élément optique 9 est fixe ou mobile en rotation, en particulier lorsqu'il s'agit de la projection d'un fluide de nettoyage, permettant une polyvalence de mise en oeuvre du procédé de nettoyage.

Par ailleurs, au moins les étapes d'acquisition d'une succession d'images E2 et de traitement de cette succession d'images acquises E3 sont répétées après l'étape de déclenchement de l'au moins une action de nettoyage E6. Ainsi, il est possible de vérifier l'efficacité du nettoyage et éventuellement de lancer une étape supplémentaire de déclenchement E6 de l' au moins une action de nettoyage pour enlever les salissures qui seraient encore présentes sur la surface externe 9b de l'élément optique 9.

Dans le cas où la forme générale circulaire ou semi-circulaire 8 n'est plus détectée par les moyens de traitement d'images 7, l'étape de déclenchement E6 de l'au moins une action de nettoyage n'a pas besoin d'être réitérée. Le résultat de l'étape E4 d'envoi du signal à l'au moins une unité électronique de contrôle 11 correspondra à une absence de détection de ladite forme 8 (étape E5').

Dans le cas où ladite forme 8 est encore détectée par les moyens de traitement d'images 7, l'étape E6 de déclenchement de l'au moins une action de nettoyage est réitérée de manière à effectuer un deuxième cycle de nettoyage. Dans ce cas, il est possible de combiner les actions de nettoyage. On peut envisager que la première action de nettoyage corresponde à l'étape E6a de modification de la vitesse de rotation de l'élément optique 9. Comme la présence de la forme 8 est encore détectée, cela indique cette action de nettoyage E6a de modification de la vitesse de rotation n'était pas suffisante pour éjecter les salissures. En effet, il peut parfois être nécessaire d'humidifier ces salissures, avec un liquide de nettoyage par exemple, afin de faciliter leur perte d'adhérence sur la surface externe 9b de l'élément optique 9 ou d'amorcer leur désagrégation pour faciliter leur éjection par exemple. Ainsi, le procédé de nettoyage peut mettre en oeuvre comme deuxième étape de déclenchement E6 de l'au moins une action de nettoyage, une étape de projection d'un fluide de nettoyage E6b, comme par exemple un liquide de nettoyage afin d'humidifier les salissures, puis une étape E6a de modification de la rotation de l'élément optique 9 afin d'éjecter les salissures humidifiées. De manière alternative, ces étapes de projection d'un fluide de nettoyage E6b et de modification de la vitesse de rotation E6a de l'élément optique 9 peuvent être conjointement mises en oeuvre.

Selon encore une autre variante, lorsque la mise en oeuvre d'une deuxième étape de déclenchement E6 de l'au moins une action de nettoyage est nécessaire, cette étape de déclenchement E6 peut comprendre une première étape E6b de projection de liquide de nettoyage puis l'étape E6c de passage de l'organe d'essuyage 23 sur la surface externe 9b de l'élément optique 9 lorsque celui-ci est à l'arrêt afin de permettre un nettoyage mécanique de cette surface externe 9b. Ainsi, l'unité électronique de contrôle 11 peut piloter une combinaison d'actions de nettoyage de manière conjointe ou les unes à la suite des autres.

Dans le procédé décrit ci-dessus, il est fait référence à une unité électronique de contrôle 11. Ce procédé peut par exemple être mis en oeuvre par le système d'assistance à la conduite 1 représenté en référence aux figures 5 et 6. En variante, ce procédé peut être mis en oeuvre par un système d'assistance à la conduite 1 comportant une première unité électronique de contrôle 11 et une ou plusieurs unités électroniques de contrôle additionnelles 11', comme représenté en référence à la figure 4.

Le procédé de nettoyage décrit précédemment peut être mis en oeuvre lorsque le véhicule automobile est en mouvement ou à l'arrêt. Ceci permet d'avoir une polyvalence au niveau du nettoyage de l'élément optique 9 sans être limité par la mise en mouvement du véhicule automobile. On garantit ainsi la bonne opérabilité du système d'assistance 1 à la conduite lorsque l'utilisateur du véhicule automobile en a besoin.

Les modes de réalisation décrits précédemment sont des exemples donnés à titre illustratif et non limitatif. En effet, il est tout à fait possible pour l'homme de l'art d'utiliser d'autres types d'actionneur 5 qu'un moteur afin de mettre en rotation l'élément optique 9 sans sortir du cadre de la présente invention. Par ailleurs, l'homme de l'art pourra mettre en oeuvre d'autres actions de nettoyage que celles décrites précédemment sans sortir du cadre de la présente invention. D'autre part, l'homme de l'art pourra combiner certaines étapes du procédé de nettoyage décrites ci-dessus ou encore intervertir certaines étapes de ce procédé de nettoyage sans sortir du cadre de la présente invention.

Ainsi, l'obtention d'un procédé de nettoyage d'un dispositif de protection 3 d'un capteur optique 13 pour un véhicule automobile permettant d'assurer un nettoyage efficace automatique d'un élément optique 9 disposé en amont du capteur optique 13 simple de mise en oeuvre et dont l'étape de détection des salissures peut être réalisée même lorsque le véhicule automobile est à l'arrêt est possible grâce au système d'assistance à la conduite 1 décrit ci-dessus mettant en oeuvre ce procédé de nettoyage.

## Revendications

1. Procédé de nettoyage d'un dispositif de protection (3) pour un système d'assistance à la conduite (1) pour véhicule automobile, ledit système d'assistance à la conduite (1) comportant un capteur optique (13), le capteur optique (13) présentant une optique (14), et le dispositif de protection (3) présentant un élément optique (9) disposé en amont de l'optique (14), ledit élément optique (9) présentant une surface interne (9a) disposée en regard de l'optique (14) et une surface externe (9b) opposée à la surface interne (9a) et étant monté mobile autour d'un axe de rotation (A1),
**caractérisé en ce que** le procédé comporte les étapes suivantes :
• (E3) traitement d'une succession d'images acquises par le capteur optique (13) lorsque l'élément optique (9) est en rotation, de manière à détecter sur les images acquises une forme générale circulaire ou semi-circulaire (8) centrée sur l'axe de rotation (A1) de l'élément optique (9) engendrée par des salissures déposées sur la surface externe (9b) de l'élément optique (9), et
• (E6) déclenchement d'au moins une action de nettoyage de la surface externe (9b) de l'élément optique (9) en cas de détection de ladite forme (8).

2. Procédé de nettoyage selon la revendication précédente, **caractérisé en ce que** l'étape de traitement d'une succession d'images (E3) est mise en oeuvre à l'aide de moyens de traitement d'images (7) du système d'assistance à la conduite (1).

3. Procédé de nettoyage selon l'une des revendications 1 ou 2, **caractérisé en ce que** ladite étape de traitement d'une succession d'images (E3) comporte au moins une séquence parmi une séquence de détection de la luminance de chaque pixel de chaque image acquise par le capteur optique (13), une séquence de détection d'au moins une zone sombre sur chaque pixel de chaque image acquise par le capteur optique (13), ou une séquence de comparaison de la succession d'images acquises par le capteur optique (13) entre elles.

4. Procédé de nettoyage selon l'une quelconque des revendications précédentes, **caractérisé en ce qu'**au moins l'étape de traitement d'une succession d'images (E3) est répétée après l'étape de déclenchement (E6) de l'au moins une action de nettoyage.

5. Procédé de nettoyage selon l'une quelconque des revendications précédentes, **caractérisé en ce que** l' au moins une action de nettoyage est mise en oeuvre lorsque l'élément optique (9) est fixe.

6. Procédé de nettoyage selon l'une quelconque des revendications 1 à 4, **caractérisé en ce que** l' au moins une action de nettoyage est mise en oeuvre lorsque l'élément optique (9) est mobile en rotation.

7. Procédé de nettoyage selon l'une quelconque des revendications précédentes, **caractérisé en ce que** ladite au moins une action de nettoyage est choisie parmi une action de modification de la vitesse de rotation (E6a) de l'élément optique (9), une action de projection d'un fluide de nettoyage (E6b), comme un liquide de nettoyage ou de l'air comprimé, une action d'arrêt de la rotation de l'élément optique et une action de passage (E6c) d'un organe d'essuyage (23), tel qu'une lame d'essuyage, sur la surface externe (9b) de l'élément optique (9), ou encore une combinaison de ces actions.

8. Procédé de nettoyage selon la revendication 7, **caractérisé en ce qu'**il comporte une étape de séchage (E4b') pendant laquelle l'élément optique (9) est mu en rotation.

9. Système d'assistance à la conduite (1) pour un véhicule automobile comprenant un capteur optique (13) présentant une optique (14) et configuré pour acquérir au moins une image, et un dispositif de protection (3) du capteur optique (13), le dispositif de protection (3) comportant :
• un élément optique (9) disposé en amont de l'optique (14) du capteur optique (13) et monté mobile autour d'un axe de rotation (A1), ledit élément optique (9) présentant une surface interne (9a) disposée en regard de l'optique (14) et une surface externe (9b) opposée à la surface interne (9a), et
• un actionneur (5) configuré pour entrainer en rotation l'élément optique (9),
**caractérisé en ce que** le système d'assistance à la conduite (1) comprend :
- des moyens de traitement d'image (7) configurés pour traiter une succession d'images acquises par le capteur optique (13) lorsque l'élément optique (9) est en rotation, de manière à détecter une forme générale circulaire ou semi-circulaire (8) centrée sur l'axe de rotation (A1) de l'élément optique (9) engendrée par des salissures déposées sur la surface externe (9b) de l'élément optique (9), et
- au moins une unité électronique de contrôle (11) configurée pour communiquer avec les moyens de traitement d'images (7), et pour déclencher au moins une action de nettoyage de la surface externe (9b) de l'élément optique (9) lorsque ladite forme (8) est détectée par les moyens de traitement d'image (7).

10. Système d'assistance à la conduite (1) selon la revendication 9, **caractérisé en ce que** le capteur optique (13) comprend les moyens de traitement d'images (7).

11. Système d'assistance à la conduite (1) selon l'une quelconque des revendications 9 ou 10, **caractérisé en ce que** l'unité électronique de contrôle (11) configurée pour déclencher l'au moins une action de nettoyage est configurée pour piloter l'actionneur (5) d'entrainement en rotation de l'élément optique (9).

12. Système d'assistance à la conduite (1) selon l'une quelconque des revendications 9 à 11 , **caractérisé en ce qu'**il comprend en outre au moins une buse de projection (19) configurée pour projeter un fluide de nettoyage sur la surface externe (9b) de l'élément optique (9) lorsque l' au moins une action de nettoyage est déclenchée.

## Patentansprüche

1. Verfahren zur Reinigung einer Schutzvorrichtung (3) für ein Fahrassistenzsystem (1) für ein Kraftfahrzeug, wobei das Fahrassistenzsystem (1) einen optischen Sensor (13) beinhaltet, wobei der optische Sensor (13) eine Optik (14) aufweist und die Schutzvorrichtung (3) ein optisches Element (9) aufweist, das der Optik (14) vorgelagert ist, wobei das optische Element (9) eine Innenfläche (9a), die gegenüber der Optik (14) angeordnet ist, und eine der Innenfläche (9a) entgegengesetzte Außenfläche (9b) aufweist, und um eine Drehachse (A1) beweglich gelagert ist,
**dadurch gekennzeichnet, dass** das Verfahren die folgenden Schritte beinhaltet:
• (E3) Verarbeiten einer Folge von Bildern, die vom optischen Sensor (13) erfasst werden, wenn sich das optische Element (9) dreht, um auf den erfassten Bildern eine allgemein kreisförmige oder halbkreisförmige Form (8) zu detektieren, die auf der Drehachse (A1) des optischen Elements (9) zentriert ist, die durch Verschmutzungen hervorgerufen wird, die auf der Außenfläche (9b) des optischen Elements (9) abgelagert sind, und
• (E6) Auslösen wenigstens einer Aktion des Reinigens der Außenfläche (9b) des optischen Elements (9) bei Detektion der Form (8).

2. Reinigungsverfahren nach dem vorhergehenden Anspruch, **dadurch gekennzeichnet, dass** der Schritt des Verarbeitens einer Folge von Bildern (E3) mithilfe von Bildverarbeitungsmitteln (7) des Fahrassistenzsystems (1) durchgeführt wird.

3. Reinigungsverfahren nach einem der Ansprüche 1 oder 2, **dadurch gekennzeichnet, dass** der Schritt des Verarbeitens einer Folge von Bildern (E3) wenigstens eine Sequenz von einer Sequenz des Detektierens der Leuchtdichte jedes Pixels jedes vom optischen Sensor (13) erfassten Bilds, einer Sequenz des Detektierens wenigstens eines dunklen Bereichs auf jedem Pixel jedes vom optischen Sensor (13) erfassten Bilds, oder einer Sequenz des Miteinandervergleichens der Folge von Bildern, die vom optischen Sensor (13) erfasst wurden, beinhaltet.

4. Reinigungsverfahren nach einem der vorhergehenden Ansprüche, **dadurch gekennzeichnet, dass** wenigstens der Schritt des Verarbeitens einer Folge von Bildern (E3) nach dem Schritt des Auslösens (E6) der wenigstens einen Reinigungsaktion wiederholt wird.

5. Reinigungsverfahren nach einem der vorhergehenden Ansprüche, **dadurch gekennzeichnet, dass** die wenigstens eine Reinigungsaktion durchgeführt wird, wenn das optische Element (9) fest ist.

6. Reinigungsverfahren nach einem der Ansprüche 1 bis 4, **dadurch gekennzeichnet, dass** die wenigstens eine Reinigungsaktion durchgeführt wird, wenn das optische Element (9) drehbeweglich ist.

7. Reinigungsverfahren nach einem der vorhergehenden Ansprüche, **dadurch gekennzeichnet, dass** die wenigstens eine Reinigungsaktion aus einer Aktion des Änderns der Drehgeschwindigkeit (E6a) des optischen Elements (9), einer Aktion des Ausstoßens eines Reinigungsfluids (E6b) wie einer Reinigungsflüssigkeit oder Druckluft, einer Aktion des Anhaltens der Drehung des optischen Elements und einer Aktion des Bewegens (E6b) eines Wischorgans (23) wie etwa eines Wischblatts auf der Außenfläche (9b) des optischen Elements (9), oder auch einer Kombination dieser Aktionen, gewählt wird.

8. Reinigungsverfahren nach Anspruch 7, **dadurch gekennzeichnet, dass** es einen Schritt des Trocknens (E4b') beinhaltet, bei dem das optische Element (9) drehend bewegt wird.

9. Fahrassistenzsystem (1) für ein Kraftfahrzeug, umfassend einen optischen Sensor (13), der eine Optik (14) aufweist und dazu ausgebildet ist, wenigstens ein Bild zu erfassen, und eine Schutzvorrichtung (3) des optischen Sensors (13), wobei die Schutzvorrichtung (3) Folgendes beinhaltet:
• ein optisches Element (9), das der Optik (14) des optischen Sensors (13) vorgelagert ist und um eine Drehachse (A1) beweglich gelagert ist, wobei das optische Element (9) eine Innenfläche (9a), die gegenüber der Optik (14) angeordnet ist, und eine der Innenfläche (9a) entgegengesetzte Außenfläche (9b) aufweist, und
• einen Aktuator (5), der dazu ausgebildet ist, das optische Element (9) zu drehen,
**dadurch gekennzeichnet, dass** das Fahrassistenzsystem (1) Folgendes umfasst:
- Bildverarbeitungsmittel (7), die dazu ausgebildet sind, eine Folge von Bildern zu verarbeiten, die vom optischen Sensor (13) erfasst werden, wenn sich das optische Element (9) dreht, um eine allgemein kreisförmige oder halbkreisförmige Form (8) zu detektieren, die auf der Drehachse (A1) des optischen Elements (9) zentriert ist, die durch Verschmutzungen hervorgerufen wird, die auf der Außenfläche (9b) des optischen Elements (9) abgelagert sind, und
- wenigstens eine elektronische Steuereinheit (11), die dazu ausgebildet ist, mit den Bildverarbeitungsmitteln (7) zu kommunizieren und wenigstens eine Aktion des Reinigens der Außenfläche (9b) des optischen Elements (9) auszulösen, wenn die Form (8) von den Bildverarbeitungsmitteln (7) detektiert wird.

10. Fahrassistenzsystem (1) nach Anspruch 9, **dadurch gekennzeichnet, dass** der optische Sensor (13) die Bildverarbeitungsmittel (7) umfasst.

11. Fahrassistenzsystem (1) nach einem der Ansprüche 9 oder 10, **dadurch gekennzeichnet, dass** die elektronische Steuereinheit (11), die dazu ausgebildet ist, die wenigstens eine Reinigungsaktion auszulösen, dazu ausgebildet ist, den Aktuator (5) zur Drehung des optischen Elements (9) anzusteuern.

12. Fahrassistenzsystem (1) nach einem der Ansprüche 9 bis 11, **dadurch gekennzeichnet, dass** es ferner wenigstens eine Ausstoßdüse (19) umfasst, die dazu ausgebildet ist, ein Reinigungsfluid auf die Außenfläche (9b) des optischen Elements (9) abzugeben, wenn die wenigstens eine Reinigungsaktion ausgelöst wird.

## Claims

1. Method for cleaning a protective device (3) for a driver assist system (1) for a motor vehicle, said driver assist system (1) comprising an optical sensor (13), the optical sensor (13) having an optic (14), and the protective device (3) having an optical element (9) arranged upstream of the optic (14), said optical element (9) having an inner surface (9a) arranged facing the optic (14) and an outer surface (9b) opposite the inner surface (9a) and being movably mounted about an axis of rotation (A1),
**characterized in that** the method comprises the following steps:
• processing (E3) a succession of images acquired by the optical sensor (13) when the optical element (9) is rotating, so as to detect a general circular or semi-circular shape (8) on the acquired images that is centered on the axis of rotation (A1) of the optical element (9) and is generated by dirt deposited on the outer surface (9b) of the optical element (9); and
• triggering (E6) at least one action for cleaning the outer surface (9b) of the optical element (9) if said shape (8) is detected.

2. Cleaning method according to the preceding claim, **characterized in that** the step (E3) of processing a succession of images is implemented with the assistance of image processing means (7) of the driver assist system (1) .

3. Cleaning method according to either of Claims 1 or 2, **characterized in that** said step (E3) of processing a succession of images comprises at least one sequence from among a sequence for detecting the luminance of each pixel of each image acquired by the optical sensor (13), a sequence for detecting at least one dark zone on each pixel of each image acquired by the optical sensor (13), or a sequence for comparing the succession of images acquired by the optical sensor (13) with each other.

4. Cleaning method according to any one of the preceding claims, **characterized in that** at least the step (E3) of processing a succession of images is repeated after the step (E6) of triggering the at least one cleaning action.

5. Cleaning method according to any one of the preceding claims, **characterized in that** the at least one cleaning action is implemented when the optical element (9) is fixed.

6. Cleaning method according to any one of Claims 1 to 4, **characterized in that** the at least one cleaning action is implemented when the optical element (9) is rotating.

7. Cleaning method according to any one of the preceding claims, **characterized in that** said at least one cleaning action is selected from among an action (E6a) for modifying the speed of rotation of the optical element (9), an action (E6b) for spraying a cleaning fluid, such as a cleaning liquid or compressed air, an action for stopping the rotation of the optical element and an action (E6c) for passing a wiper component (23), such as a wiper blade, over the outer surface (9b) of the optical element (9), or even a combination of these actions.

8. Cleaning method according to Claim 7, **characterized in that** it comprises a drying step (E4b'), during which the optical element (9) is set into rotation.

9. Driver assist system (1) for a motor vehicle comprising an optical sensor (13) having an optic (14) and configured to acquire at least one image, and a protective device (3) for the optical sensor (13), the protective device (3) comprising:
• an optical element (9) arranged upstream of the optic (14) of the optical sensor (13) and being movably mounted about an axis of rotation (A1), said optical element (9) having an inner surface (9a) arranged facing the optic (14) and an outer surface (9b) opposite the inner surface (9a); and
• an actuator (5) configured to rotate the optical element (9);
**characterized in that** the driver assist system (1) comprises:
- image processing means (7) configured to process a succession of images acquired by the optical sensor (13) when the optical element (9) is rotating, so as to detect a general circular or semi-circular shape (8) centered on the axis of rotation (A1) of the optical element (9) that is generated by dirt deposited on the outer surface (9b) of the optical element (9); and
- at least one electronic control unit (11) configured to communicate with the image processing means (7), and to trigger at least one action for cleaning the outer surface (9b) of the optical element (9) when said shape (8) is detected by the image processing means (7).

10. Driver assist system (1) according to Claim 9, **characterized in that** the optical sensor (13) comprises the image processing means (7).

11. Driver assist system (1) according to either of Claims 9 or 10, **characterized in that** the electronic control unit (11) configured to trigger the at least one cleaning action is configured to control the actuator (5) for rotating the optical element (9).

12. Driver assist system (1) according to any one of Claims 9 to 11, **characterized in that** it further comprises at least one spray nozzle (19) configured to spray a cleaning fluid onto the outer surface (9b) of the optical element (9) when the at least one cleaning action is triggered.
